# FASCICULE DE BREVET EUROPEEN

(11) **EP 0 394 145 B1**
(45) Date de publication et mention de la délivrance du brevet: **21.07.1993**
(21) Numéro de dépôt: 90420176.1
(22) Date de dépôt: 06.04.1990
(51) Int. Cl.: F16J 15/12

(54) **Procédé de fabricaton d'un joint comportant un corps métallique équipé d'au moins un élément d'étanchéité souple**
Verfahren zur Herstellung einer Dichtung mit metallischem Körper und einem weichen Abschichtungselement
Method of manufacturing a gasket with metal body and soft sealing element

(30) Priorité: 18.04.1989 FR 8905763
(43) Date de publication de la demande: 24.10.1990
(73) Titulaire: CURTY PAYEN S.A., 69800 Saint-Priest (FR)
(72) Inventeur: Desverchere, Jean Georges, F-69003 Lyon (FR); Thiaullier, Francisque Marius, F-69800 Saint Priest (FR)
(74) Mandataire: Maureau, Philippe

(56) Documents cités:
- DE-A- 3 609 769
- FR-A- 2 574 891

## Description

La présente invention a pour objet un procédé de fabrication d'un joint comportant un corps métallique équipé d'au moins un élément d'étanchéité souple. Dans de nombreux domaines de l'industrie mécanique, il est nécessaire d'utiliser des joints destinés à réaliser l'étanchéité, notamment au niveau de passages de fluides tels que liquides de refroidissement, liquides de lubrification ou encore fluides gazeux tels que mélanges combustibles dans le cas d'un moteur à explosion.

Les moteurs à explosion sont équipés d'un certain nombre de joints, tels que des joints de culasses, des joints d'admission du mélange comburant ou encore de joints de pompes à eau, pompes à essence, distribution...

Il est connu de longue date de réaliser des joints comportant un corps, par exemple en carton de fibres d'amiante ou similaire, présentant des ouvertures au niveau des chambres de combustion ou au niveau des passages de liquides et des orifices de serrage.

Dans le cas des chambres de combustion, l'étanchéité est réalisée par des pièces mécaniques complexes appelées "anneaux de feu". Dans le cas des passages de liquide de refroidissement ou de liquides de lubrification, l'étanchéité est réalisée par des cordons souples d'élastomère.

Certains types de joints comportent un corps métallique. Il se pose le problème de réaliser la fixation des éléments d'étanchéité souples sur chaque face de ce corps métallique.

Il convient tout d'abord de réaliser des rainures dans chaque face du corps, ces rainures étant obtenues par usinage ou attaque chimique.

A l'issue de l'opération de ménagement des rainures qui est une opération complexe, il est procédé au dégraissage du corps joint, au dépôt d'un primaire d'adhérence dans le fond de chaque rainure, puis au moulage d'un cordon sur chaque face du corps.

Compte tenu de sa structure, le corps nécessite deux moulages spécifiques sur chacune de ses faces.

Enfin, si cette solution est complexe, longue et coûteuse à mettre en oeuvre, elle n'offre pas toutefois une totale satisfaction du fait que la tenue de l'élément d'étanchéité dans la rainure lui servant de logement est médiocrement assurée, l'élément d'étanchéité pouvant se déchausser de la rainure sous l'effet de contraintes exercées latéralement.

Le but de la présente invention est de fournir un procédé de fabrication de joints comportant un corps métallique, qui soit simple et économique à mettre en oeuvre et qui assure une parfaite tenue de chaque élément d'étanchéité dans la rainure lui servant de logement.

A cet effet, le procédé qu'elle concerne consiste :
- à ménager dans le corps métallique des trous régulièrement répartis uniquement le long de chaque ligne destinée à recevoir un élément d'étanchéité,
- à réaliser, par emboutissage, le ménagement d'une rainure le long de chaque ligne destinée à recevoir un élément d'étanchéité, de manière à ce que l'ensemble des trous soit situé dans la base de cette rainure, et
- à réaliser le moulage d'éléments d'étanchéité dans chaque rainure que comporte le corps.

Il doit être noté que l'opération de ménagement des fentes par emboutissage est rendue possible, grâce à la présence des trous qui ont été préalablement ménagés dans le corps. En effet, lors de l'emboutissage, la matière flue à l'intérieur des trous, réduisant la section de ceux-ci qui deviennent des fentes de formes irrégulières.

Il est ainsi possible de réaliser des rainures de façon simple, économique et rapide, sans déformation du corps, et sans ménagement de surépaisseur à la surface de celui-ci, puisque la matière flue uniquement dans les trous préalablement ménagés.

Avantageusement, les trous ménagés dans le corps du joint, sont des trous traversants. Cette technique est intéressante car permettant d'obtenir, après emboutissage, des fentes qui sont elles aussi traversantes, ce qui rend possible le moulage des cordons d'étanchéité sur les deux faces du corps au cours d'une seule opération, et ce qui assure le ménagement de zones de liaison entre les éléments d'étanchéité ménagés sur les deux faces du corps évitant tout risque de déchaussage de ceux-ci, comme tel est le cas habituellement.

Les trous ménagés dans le corps du joint peuvent être de section circulaire, carrée, rectangulaire ou encore présenter une forme de diabolo, la zone centrale du trou étant moins large que les zones d'extrémité. Cette dernière structure permet de limiter le fluage de la matière au niveau des bords de la rainure, lors du ménagement de cette dernière. Les trous peuvent être réalisés dans le corps du joint de façon centrée ou en quinconce par rapport à la ligne centrale de la rainure.

Il est déjà connu du FR-A-2 574 891 du même demandeur un procédé de réalisation d'un joint d'étanchéité du type consistant à déposer un cordon d'étanchéité en une matière souple dans une rainure ménagée par emboutissage dans un support métallique plan, ce support métallique étant constitué par une plaque comportant des cavités régulièrement réparties sur sa surface.

De toute façon, l'invention sera bien comprise à l'aide de la description qui suit, en référence au dessin schématique annexé représentant, à titre d'exemple non limitatif, une forme d'exécution d'un joint de culasse obtenu par le procédé selon l'invention :

Figure 1 est une vue de face de ce joint fini.

Figures 2 et 3 en sont deux vues de face à l'issue de deux phases intermédiaires de réalisation.

Figures 4 et 5 sont deux vues en coupe transversale partielle et à échelle agrandie de ce joint, respectivement, après la phase de fabrication de figure 2 et le joint fini.

Le joint 2, représenté au dessin, est un joint de culasse comportant un corps 3 métallique présentant des trous de serrage 4, ainsi que des anneaux de feu 5. Il convient de réaliser l'étanchéité aux fluides à l'aide d'éléments d'étanchéité 6 déposés sur les deux faces du corps et constitués par une matière élastomère souple possédant une bonne résistance mécanique.

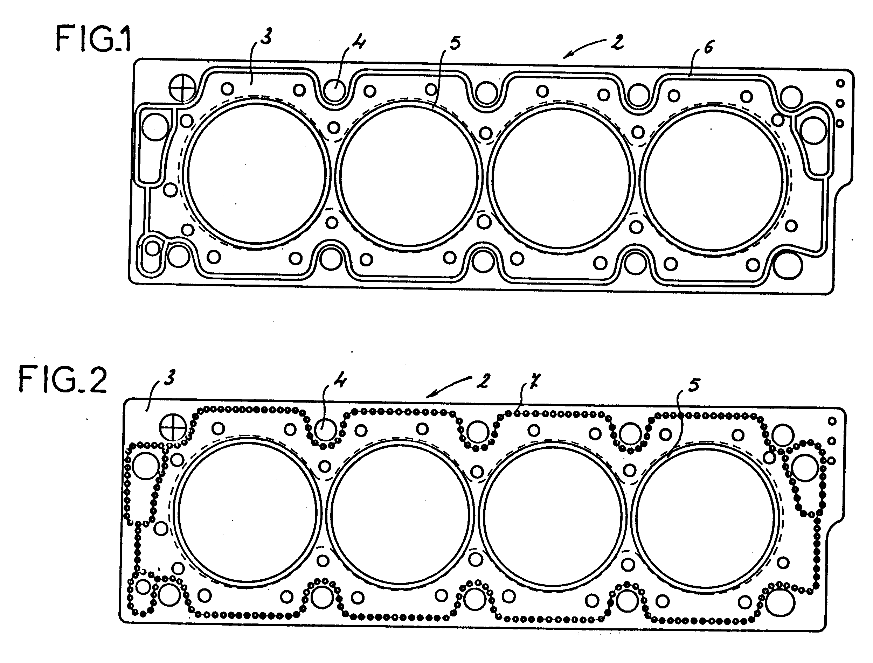

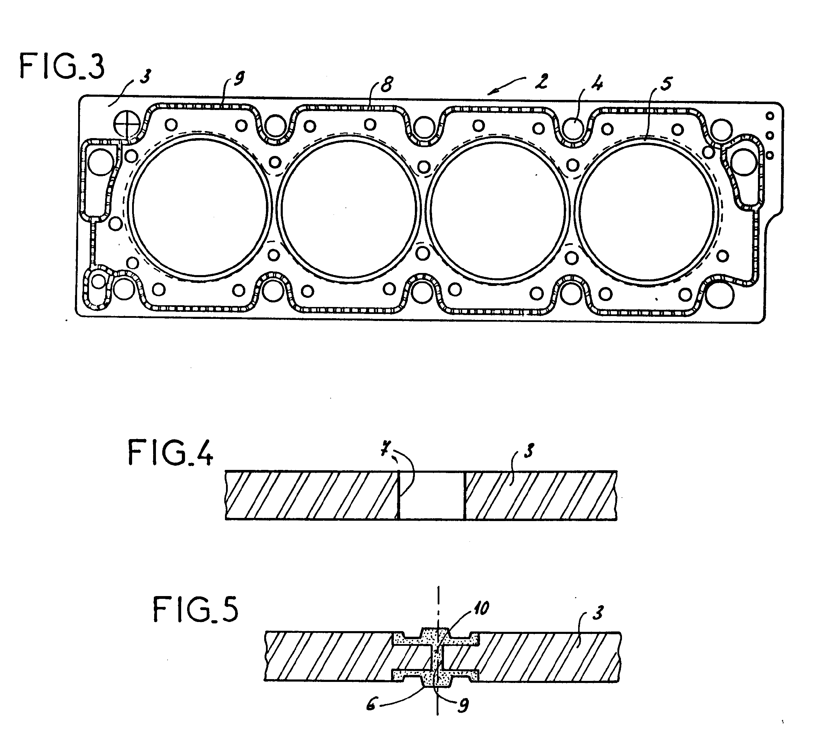

Le procédé d'obtention de ce joint 2 consiste à ménager le long de la ligne où les éléments d'étanchéité 6 doivent être déposés, des trous traversants 7 de section circulaire, régulièrement répartis, comme montré aux figures 2 et 4.

Après ménagement de ces trous 7, il est procédé, par emboutissage, au ménagement des deux rainures 8 débouchant sur les deux faces du corps 3, la formation de ces rainures assurant le fluage de la matière dans les trous 7 dont la section se réduit et qui forment alors des fentes 9.

Il est à noter que, grâce au fluage de la matière dans les trous 7, la surface des deux parois opposées du joint 3 n'est absolument pas altérée.

Enfin, il est procédé, au cours d'une seule opération de moulage à température ambiante, suivie d'une reprise à chaud, au dépôt des cordons d'étanchéité 6, ce moulage en une seule opération étant rendu possible grâce à la présence des fentes traversantes 9.

Il résulte de cette technique la formation de ponts 10 de liaison au niveau de chaque fente 9, entre les deux cordons 6 disposés dans les rainures 8 ménagées dans les deux parois du corps 3.

Comme il ressort de ce qui précède, le procédé selon l'invention est très économique car permettant d'obtenir simplement et rapidement les rainures destinées au logement des cordons d'étanchéité, sans avoir à recourir à des opérations de traitement de surface. En outre, ce procédé permet de réaliser le moulage des cordons sur les deux faces du corps au cours d'une seule opération, et assure la solidarisation des deux cordons ce qui évite tout risque de déchaussage ultérieur de ceux-ci.

Comme il va de soi, l'invention ne se limite pas au seul mode de mise en oeuvre de ce procédé, décrit ci-dessus à titre d'exemple ; elle en embrasse, au contraire, toutes les variantes couvertes par l'objet des revendications 1 à 5.

C'est ainsi notamment que les trous ménagés dans le corps métallique pourraient ne pas être traversants, ce qui imposerait deux opérations de moulage successives, sans que l'on sorte pour autant du cadre de l'invention.

## Revendications

1. Procédé de fabrication d'un joint comportant un corps métallique (3) équipé d'au moins un élément d'étanchéité souple, ce procédé consistant à ménager dans le corps métallique (3) des trous (7) régulièrement répartis uniquement le long de chaque ligne destinée à recevoir un élément d'étanchéité, à réaliser, par emboutissage, le ménagement d'une rainure (8) le long de chaque ligne destinée à recevoir un élément d'étanchéité, de manière à ce que l'ensemble des trous (7) soit situé dans la base de cette rainure (8), et à réaliser le moulage d'éléments d'étanchéité (6) dans chaque rainure (8) que comporte le corps.

2. Procédé selon la revendication 1, caractérisée en ce que les trous (7) ménagés dans le corps du joint sont des trous traversants.

3. Procédé selon l'une quelconque des revendications 1 et 2, caractérisé en ce que chaque trou présente, vu en coupe transversale parallèlement au plan du joint, une forme de diabolo, présentant une zone centrale moins large que ses zones d'extrémité.

4. Procédé selon l'une quelconque des revendications 1 et 2, caractérisé en ce que les trous (7) sont ménagés de façon symétrique par rapport à la ligne centrale de chaque rainure (8) du corps.

5. Procédé selon l'une quelconque des revendications 1 et 2, caractérisé en ce que les trous (7) sont ménagés en quinconce par rapport à la ligne centrale de chaque rainure (8) du corps.

## Patentansprüche

1. Verfahren zur Herstellung einer Dichtung mit einem Metallkörper (3) mit wenigstens einem biegsamen Dichtungselement, wobei man in dem Metallkörper (3) Löcher (7) anbringt, die regelmäßig verteilt lediglich längs jeder Linie vorgesehen sind, die ein Dichtungselement aufnehmen soll, daß verformend eine Vertiefung (8) längs jeder zur Aufnahme eines Dichtungselements bestimmten Linie angebracht wird derart, daß sich alle Löcher (7) in der Basis der Vertiefung (8) befinden, und daß die in den Vertiefungen (8) des Körpers befindlichen Dichtungselemente (6) verformt werden.

2. Verfahren nach Anspruch 1,
**dadurch gekennzeichnet**,
daß die im Körper angebrachten Löcher (7) Durchgangslöcher sind.

3. Verfahren nach Anspruch 1 oder 2,
**dadurch gekennzeichnet,**
daß jedes Loch in einem Schnitt parallel zur Verbindungsebene einen X-förmigen Querschnitt hat mit einer Mittelzone, die schmaler ist als die Endzonen.

4. Verfahren nach Anspruch 1 oder 2,
**dadurch gekennzeichnet,**
daß die Löcher (7) in Bezug auf die Mittellinie jeder Vertiefung (8) des Körpers symmetrisch angelegt sind.

5. Verfahren nach Anspruch 1 oder 2,
**dadurch gekennzeichnet,**
daß die Löcher (7) in Bezug auf die Mittellinie jeder Vertiefung (8) des Körpers zick-zackförmig angeordnet sind.

## Claims

1. A method of making a gasket having a metal core (3) provided with at least one flexible sealing element, this method consisting of forming, in the metal core (3), holes (7) regularly distributed solely along each line intended to receive a sealing element, effecting, by pressing, the formation of a groove (8) along each line intended to receive a sealing element, so that all the holes (7) are situated in the base of this groove (8), and effecting the moulding of sealing elements (6) in each groove (8) provided in the body.

2. A method according to Claim 1, characterised in that the holes (7) formed in the body of the gasket are through holes.

3. A method according to either of Claims 1 and 2, characterised in that each holes has, seen in transverse section parallel to the plane of the gasket, the form of a diabolo, having a central region narrower than its end regions.

4. A method according to either of Claims 1 and 2, characterised in that the holes (7) are formed in symmetrical manner with respect to the central line of each groove (8) of the body.

5. A method according to either of Claims 1 and 2, characterised in that the holes (7) are formed in staggered relationship with respect to the central line of each groove (8) of the body.
